# EUROPÄISCHE PATENTSCHRIFT

(11) **EP 1 699 981 B1**
(45) Veröffentlichungstag und Bekanntmachung des Hinweises auf die Patenterteilung: **16.06.2010**
(21) Anmeldenummer: 04803600.8
(22) Anmeldetag: 08.12.2004
(51) Int. Cl.: E03C 1/04, F16B 13/08

(54) **SANIT RARMATUR MIT EINLOCHBEFESTIGUNG**
PLUMBING FIXTURE WITH A SINGLE-HOLE MOUNTING
ACCESSOIRE DESTINE A UN EQUIPEMENT SANITAIRE ET A MONTER DANS UN ORIFICE

(30) Priorität: 12.12.2003 DE 10358132
(43) Veröffentlichungstag der Anmeldung: 13.09.2006
(73) Patentinhaber: Ideal-Standard GmbH & Co. OHG, 54516 Wittlich (DE)
(72) Erfinder: BECKER, Albert, 54516 Willich (DE)
(74) Vertreter: Müller, Karl-Ernst
(86) Internationale Anmeldenummer: PCT/EP2004/013919
(87) Internationale Veröffentlichungsnummer: WO 2005/056937

(56) Entgegenhaltungen:
- DE-A1- 19 628 780
- DE-A1- 19 934 140
- GB-A- 1 187 837
- PATENT ABSTRACTS OF JAPAN Bd. 1998, Nr. 09, 31. Juli 1998 (1998-07-31) & JP 10 102556 A (TOTO LTD), 21. April 1998 (1998-04-21)
- PATENT ABSTRACTS OF JAPAN Bd. 1996, Nr. 08, 30. August 1996 (1996-08-30) & JP 08 093012 A (TOTO LTD), 9. April 1996 (1996-04-09)

## Beschreibung

Die Erfindung betrifft eine sanitäre Standarmatur zur Befestigung in einer Aufnahmebohrung eines Armaturenträgers wie eines sanitären Apparates wie Wasch- oder Spültisch oder dergleichen oder einer sonstigen Trägerplatte mit einem an dem Armaturenkörper beweglich gehalterten Befestigungsanker, der bei der Montage des Armaturenkörpers in eine mit der Aufnahmebohrung des Armaturenträgers fluchtende Lage bringbar und durch die Aufnahmebohrung führbar ist und nach Durchtritt durch die Aufnahmebohrung selbsttätig seine Sperrlage einnimmt, und mit einer Spannvorrichtung, mittels der der Armaturenkörper und der in seiner Sperrlage befindliche Befestigungsanker gegeneinander verspannbar sind.

Soweit es bei der Montage einer Standarmatur auf einem Armaturenträger darauf ankommt, die Montage lediglich von der Oberseite des Armaturenträgers und somit von der Aufstellungsseite der Standarmatur her durchführen zu können, ist in der gattungsgemäßen DE 93 05 113 U vorgeschlagen, in einer Bohrung des Armaturenkörpers einen Zuganker mit einer von diesem getragenen Spannmutter vorzusehen, wobei auf der Spannmutter ein Befestigungsanker drehbar angeordnet und aus einer Montageposition in eine Sperrlage selbsttätig schwenkend angelenkt ist. Dies wird beispielsweise dadurch bewirkt, dass der Befestigungsanker an der Spannmutter derart angelenkt ist, dass sein Schwerpunkt exzentrisch zu seinem Drehpunkt liegt, sodass sich der Befestigungsanker zur Längsachse des Zugankers selbsttätig verschwenkt. Für die Montage wird der Befestigungsanker in eine mit der Längsachse der Aufnahmebohrung fluchtende Stellung verdreht, sodass der Zuganker mit verschwenktem Befestigungsanker durch die Aufnahmebohrung hindurchgesteckt werden kann; kommt der Befestigungsanker nach Durchtritt durch die Bohrung frei, so schwenkt er unter der Wirkung seiner Schwerkraft selbsttätig in seine Sperrlage. Anschließend kann der Zuganker durch Verschrauben verkürzt werden, sodass der Befestigungsanker von unten her gegen die Unterfläche des Armaturenträgers gezogen und dadurch der Armaturenkörper mit dem Befestigungsanker verspannt wird.

Mit einer derart konzipierten bekannten Befestigung für eine Standarmatur ist der Nachteil verbunden, dass die konstruktive Auslegung des Befestigungsankers einschließlich dessen Fertigung und dessen Lagerung an der Spannmutter genau ausgeführt sein müssen, damit die selbsttätige Verschwenkung in die Sperrlage gewährleistet ist, da nach dem Einstecken des Zugankers mit dem daran gelagerten Befestigungsanker in die Aufnahmebohrung keine Möglichkeit mehr besteht, die Lage des Befestigungsankers zu korrigieren. Entsprechend sind Herstellung und Montage der für die Armaturenbefestigung erforderlichen Befestigungsteile aufwendig.

Ein weiterer Nachteil der in der DE 93 05 513 U beschriebenen Standarmatur besteht darin, dass die senkrecht verlaufende Aufnahmebohrung von der Oberseite nur dann zugänglich ist, wenn der Armaturenkörper schräg nach vorne geneigt ist, wie sich dies auch aus der zeichnerischen Darstellung in der vorgenannten Druckschrift ergibt. Insofern ist das Design von entsprechenden Standarmaturen Einschränkungen unterworfen.

Ein anderes Befestigungskonzept für eine Standarmatur ist in der DE 196 28 780 A1 beschrieben. Hierbei ist der Befestigungsanker über eine an ihm fest angebrachte Hülse mit einer darin eingeschraubten Schraube durch eine Bohrung in dem in die in dem Armaturenkörper ausgebildete Öffnung eingesetzten Armaturenkörper geführt und in der Bohrung längsverschiebbar eingerichtet. Oberhalb des Armaturenkörpers ist der Befestigungsanker mittels der mit ihm verbundenen Schraube über eine sich am Schraubenkopf abstützende Feder gegen den Armaturenkörper abgestützt.

Der Erfindung liegt daher die Aufgabe zugrunde, eine Standarmatur mit zugehöriger Befestigung in einer gattungsgemäßen Ausgestaltung derart zu verbessern, dass die Befestigungsmittel einfacher herzustellen und zu montieren, dabei aber funktionssicher sind.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass der Befestigungsanker mit dem Armaturenkörper mittels einer langgestreckten und eine größere Länge als die Materialstärke des Armaturenträgers aufweisenden biegsamen Feder verbunden ist, wobei die biegsame Feder jede beliebige Lage des Befestigungsankers relativ zum Armaturenkörper ermöglicht und nach dem Durchtritt des Befestigungsankers durch die Aufnahmebohrung für eine selbsttätige Ausrichtung des Befestigungsankers an der Unterfläche des Armaturenträgers sorgt, und dass als Spannvorrichtung eine sich am Armaturenkörper abstützende Gewindestange durch eine in dem Armaturenkörper ausgebildete Bohrung durchsteckbar und in der an der Unterfläche des Armaturenkörpers ausgerichteten Stellung des Befestigungsankers mit einem an ihrem Ende ausgebildeten Gewinde in ein an dem Befestigungsanker ausgebildetes Gewindeloch einschraubbar ist.

Mit der Erfindung ist der Vorteil verbunden, dass die Anbindung des Befestigungsankers an den Armaturenkörper über die lediglich erforderliche Feder einfach herzustellen und vorzumontieren ist; da die Feder lediglich die Halterung des Befestigungsankers und dessen bewegliche Anordnung im Verhältnis zum Armaturenkörper gewährleisten muss, unterliegt die Feder keinen speziellen Anforderungen. Auch die Herstellung und die Montage der anschließend anzubringenden Spannvorrichtung in Form der lediglich erforderlichen Gewindestange stellen keine besonderen Anforderungen, sodass insgesamt der Herstellungs- und Montageaufwand für die Befestigungsanordnung deutlich verringert ist. Gleichwohl ist die Befestigungsanordnung funktionssicher, weil nach dem Durchstecken des Befestigungsankers durch die Aufnahmebohrung des Armaturenkörpers die Feder selbstätig für die Ausrichtung des Befestigungsankers an der Unterfläche des Armaturenträgers sorgt, ohne dass dazu eine besondere Ausrichtung des Befestigungsankers erforderlich wäre.

Nach einem Ausführungsbeispiel der Erfindung ist die Feder als Schraubenfeder ausgebildet. Damit ist in vorteilhafter Weise die Möglichkeit gegeben, dass nach einem Ausführungsbeispiel der Erfindung die Gewindestange in dem von den Federwindungen umschlossenen Innenraum der Feder verläuft, sodass die Feder eine Art Führung für das Einstecken beziehungsweise Einschrauben der Gewindestange darstellt.

Um ein Verspannen der Gewindestange zwischen Armaturenkörper und Befestigungsanker zu ermöglichen, ist vorgesehen, dass die Gewindestange sich mit einer Schulter an dem Armaturenkörper abstützt. Aus Platzgründen kann dabei vorgesehen sein, dass die Bohrung des Armaturenkörpers eine Einziehung zur Aufnahme der Schulter der Gewindestange aufweist.

Alternativ kann vorgesehen sein, dass die Bohrung ein Innengewinde aufweist und die Gewindestange mit einem zugeordneten Gewinde in den Armaturenkörper einschraubbar ist.

Hinsichtlich der Ausbildung des Befestigungsankers ist nach einem Ausführungsbeispiel der Erfindung vorgesehen, dass der Befestigungsanker aus einem runden Grundkörper mit einem U-förmigen, zwei äußere Seitenschenkel bildenden Ausschnitt zur Aufnahme der an die Standarmatur anzuschließenden Wasseranschlussröhrchen besteht; ein derartiger Befestigungsanker mit einem U-förmigen Ausschnitt ist grundsätzlich aus der DE 90 12 411 U1 bekannt, wobei hier aber der Befestigungsanker nur von der Unterseite des Armaturenträgers her anbringbar ist.

Aus Montagegründen ist nach einem Ausführungsbeispiel der Erfindung vorgesehen, dass der Grundkörper des Befestigungsankers einen größeren Durchmesser als der Durchmesser der Aufnahmebohrung aufweist und auf der dem Ausschnitt abgewandten Seite mit einer sehnenartig verlaufenden Abflachung versehen ist, derart, dass der Befestigungsanker in der in Längsrichtung der Aufnahmebohrung verbogenen Stellung in die Aufnahmebohrung passt.

In der Zeichnung ist ein Ausführungsbeispiel der Erfindung wiedergegeben, welches nachstehend beschrieben ist. Es zeigen:
- Fig. 1:: Einen Armaturenkörper mit daran über eine Feder gehalterten Befestigungsanker einschließlich der nachträglich als Spannvorrichtung einführbaren Gewindestange,
- Fig. 2:: Den Gegenstand der Figur 1 bei montierter Gewindestange,
- Fig. 3:: Den Gegenstand der Figur 2 in Seitenansicht,
- Fig. 4:: Den Gegenstand der Figur 2 in einem an einem Armaturenträger montierten Zustand,
- Fig. 5:: Den an dem Armaturenträger montierten Armaturenkörper vor dem Spannen der Spannvorrichtung im Schnitt,
- Fig. 6:: Den Gegenstand der Figur 5 in fertig montiertem Zustand bei gespannter Spannvorrichtung.

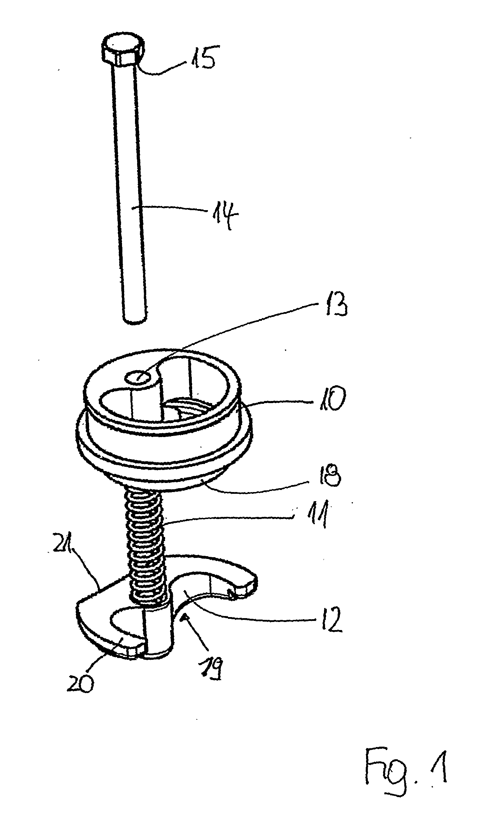

Wie zunächst Figur 1 zu entnehmen ist, ist an einem lediglich als Rumpfkörper dargestellten Armaturenkörper 10 einer an sich bekannten sanitären Standarmatur über eine zwischengeschaltete, als Schraubenfeder ausgebildete Feder 11 ein Befestigungsanker 12 gehaltert derart, dass der Befestigungsanker 12 aufgrund der Biegbarkeit der Feder 11 in jede beliebige Lage relativ zum Armaturenkörper 10 gebracht werden kann. Wie noch zu erläutern sein wird, ist eine Gewindestange 14 in eine in dem Armaturenkörper 10 ausgebildete Bohrung 13 derart einsteckbar, dass die Gewindestange 14 in dem von den Federwindungen der Feder 11 umschlossenen Innenraum verläuft und in ein am Fuße der Feder 11 in dem Befestigungsanker 12 ausgebildetes Gewindeloch einschraubbar ist.

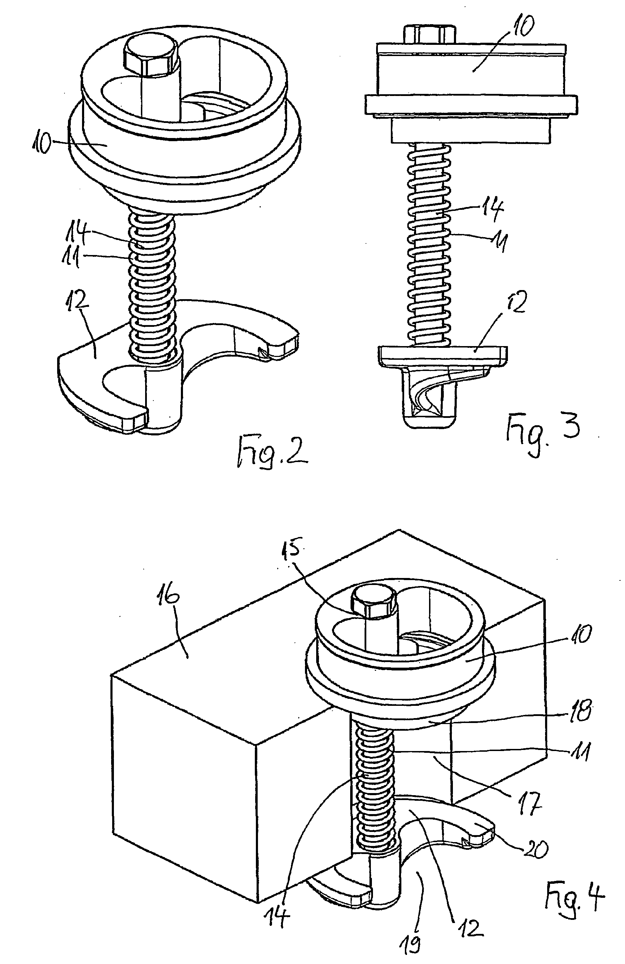

Diese vormontierte Stellung ist in den Figuren 2 und 3 dargestellt.

Aus Figur 4 ergibt sich die Montage des Armaturenkörpers 10 mit Befestigungsanker 12 an einem Armaturenträger 16, wobei dieser Armaturenträger 16 beispielsweise die sogenannte Armaturenbank eines Wasch- oder Spültisches oder eines anderen sanitären Apparates sein kann oder aber auch von einer Küchenplatte als Trägerplatte für die Standarmatur gebildet sein kann. In diesem Armaturenträger 16 ist eine Aufnahmebohrung 17 für die Einlochmontage der Standarmatur ausgebildet.

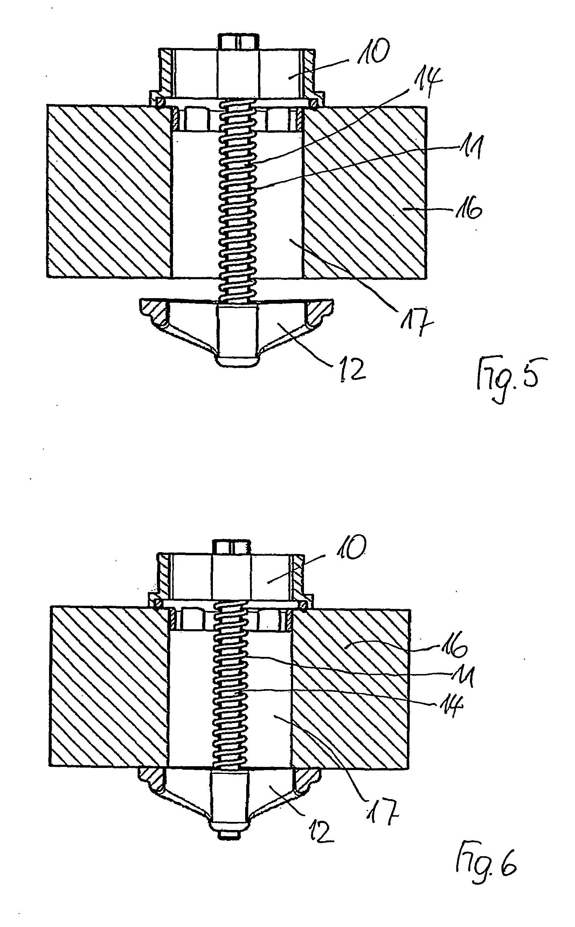

Wie aus der Zusammenschau mit den Figuren 5 und 6 ergibt, geschieht die Montage des Armaturenkörpers 10 auf dem Armaturenträger 16 dergestalt, dass bei noch nicht eingesteckter Gewindestange der Befestigungsanker 12 aufgrund der Biegsamkeit der Feder 11 in eine mit der Längsachse der Aufnahmebohrung 17 fluchtenden Lage gebracht werden kann, in welcher der Befestigungsanker 12 durch die Aufnahmebohrung 17 passt. Beim Aufsetzen des Armaturenkörpers 10 mit Befestigungsanker 12 auf den Armaturenträger 16 zentriert sich der Armaturenkörper 10 mit einem in die Aufnahmebohrung 17 eingreifenden Zentriersockel 18.

Kommt der Befestigungsanker 12 nach seinem Durchtritt durch die Aufnahmebohrung 17 aus der Aufnahmebohrung frei, so sorgt die Feder 11 für eine selbsttätige Ausrichtung des Befestigungsankers 12 in dessen Grundstellung, in welcher der Befestigungsanker 12 in etwa parallel zu der Unterfläche des Armaturenträgers 16 liegt. In dieser Stellung wird die Gewindestange 14 in die Bohrung 13 des Armaturenkörpers eingesteckt und an ihrem Ende in ein in dem Befestigungsanker 12 ausgebildetes Gewindeloch eingeschraubt; da sich hierbei die Gewindestange mit einer durch einen Kopf ausgebildeten Schulter 15 an dem Armaturenkörper 10 abstützt, wird durch Drehung der Gewindestange 14 der Befestigungsanker 12 in Richtung des Armaturenkörpers 10 gezogen, sodass dadurch eine gegenseitige Verspannung von Befestigungsanker 12 und Armaturenkörper 10 gegeben ist. Hierbei setzt dem Drehen der Gewindestange 14 die Wirkung der Feder 11 einen ausreichenden Widerstand entgegen, um ein Mitdrehen des Befestigungsankers 12 mit der Gewindestange 14 zu verhindern; kommt der Befestigungsanker 12 dann in Anlage an der Unterfläche des Armaturenträgers 16, so verhindert zusätzlich die hier entstehende Reibung ein Mitdrehen, sodass die Gewindestange 14 zur Befestigung des Armaturenkörpers 10 an dem Armaturenträger ausreichend fest angezogen werden kann.

Wie an sich aus der DE 9012 411 U1 bekannt, weist der Befestigungsanker 12 eine im wesentliche runde Grundform auf, wobei aus diesem so gebildeten runden Grundkörper ein U-förmiger Ausschnitt 19 mit dadurch entstehenden Seitenschenkeln 20 ausgebildet ist; der Ausschnitt 19 dient zur Aufnahme der an den Armaturenkörper 10 anzuschließenden Wasseranschlussröhrchen. Um die Abmessungen des Befestigungsankers im Hinblick auf das Durchstecken durch die Aufnahmebohrung 17 anzupassen und gleichzeitig die sichere Halterung des Befestigungsankers 12 an dem Armaturenträger 16 sicherzustellen, weist der Grundkörper des Befestigungskörpers 12 einen größeren Durchmesser als der Durchmesser der Aufnahmebohrung 17 auf und ist auf seiner dem Ausschnitt 19 abgewandten Seite mit einer sehnenartig verlaufenden Abflachung 21 versehen derart, dass der Befestigungsanker 12 in der in Längsrichtung der Aufnahmebohrung 17 verbogenen Stellung in die Aufnahmebohrung 17 passt. Nach der selbsttätigen Ausrichtung des Befestigungsankers ragen insoweit die Seitenschenkel 20 über den Rand der Aufnahmebohrung 17 hinaus und sorgen für die sichere Festlegung des Befestigungsankers 12 an der Unterfläche des Armaturenträgers 16.

## Patentansprüche

1. Sanitäre Standarmatur zur Befestigung in einer Aufnahmebohrung (17) eines Armaturenträgers (16) wie eines sanitären Apparates wie Wasch- oder Spültisch oder dergleichen oder einer sonstigen Trägerplatte mit einem Armaturenkörper (10) und mit einem an dem Armaturenkörper (10) beweglich gehalterten Befestigungsanker (12), der bei der Montage des Armaturenkörpers (10) in eine mit der Aufnahmebohrung (17) des Armaturenträgers (16) fluchtende Lage bringbar und durch die Aufnahmebohrung (17) führbar ist und nach Durchtritt durch die Aufnahmebohrung (17) selbsttätig seine Sperrlage einnimmt, mit einer biegsamen Feder (11), wobei der Befestigungsanker (12) mit dem Armaturenkörper (10) mittels der langgestreckten und eine größere Länge als die Materialstärke des Armaturenträgers (16) aufweisenden biegsamen Feder (11) verbunden ist und wobei die biegsame Feder (11) nach dem Durchtritt des Befestigungsankers (12) durch die Aufnahmebohrung (17) für eine selbsttätige Ausrichtung des Befestigungsankers (12) an der Unterseite des Armaturenträgers (16) sorgt, und mit einer Spannvorrichtung, mittels der der Armaturenkörper (10) und der in seiner Sperrlage befindliche Befestigungsanker (12) gegeneinander verspannbar sind, und die eine Gewindestange ist, **dadurch gekennzeichnet, dass** die biegsame Feder (11) jede beliebige Lage des Befestigungsankers (12) relativ zum Armaturenkörper (10) ermöglicht und dass die sich am Armaturenkörper (10) abstützende Gewindestange (14) in der an der Unterseite des Armaturenträgers (16) ausgerichteten Stellung des Befestigungsankers (12) durch eine in dem Armaturenkörper (10) ausgebildete Bohrung (13) durchsteckbar und mit einem an ihrem Ende ausgebildeten Gewinde in ein an dem Befestigungsanker ausgebildetes Gewindeloch einschraubbar ist.

2. Standarmatur nach Anspruch 1, **dadurch gekennzeichnet, dass** die Feder (11) als Schraubenfeder ausgebildet ist.

3. Standarmatur nach Anspruch 1 oder 2, **dadurch gekennzeichnet, dass** die Gewindestange (14) in dem von den Federwindungen umschlossenen Innenraum der Feder (1) verläuft.

4. Standarmatur nach einem der Ansprüche 1 bis 3, **dadurch gekennzeichnet, dass** die Gewindestange (14) sich mit einer Schulter (15) an dem Armaturenkörper (10) abstützt.

5. Standarmatur nach Anspruch 4, **dadurch gekennzeichnet, dass** die Bohrung (13) in dem Armaturenkörper (10) eine Einsenkung zur Aufnahme der Schulter (15) der Gewindestange (14) aufweist.

6. Standarmatur nach einem der Ansprüche 1 bis 3, **dadurch gekennzeichnet, dass** die Bohrung (13) ein Innengewinde aufweist und die Gewindestange (14) mit einem zugeordneten Gewinde in den Armaturenkörper (10) einschraubbar ist.

7. Standarmatur nach einem der Ansprüche 1 bis 6, **dadurch gekennzeichnet, dass** der Befestigungsanker (12) aus einem runden Grundkörper mit einem U-förmigen, zwei äußere Seitenschenkel (20) bildenden Ausschnitt (19) zur Aufnahme der an die Standarmatur anzuschließenden Wasseranschlussröhrchen besteht.

8. Standarmatur nach Anspruch 7, **dadurch gekennzeichnet, dass** der Grundkörper des Befestigungsankers (12) einen größeren Durchmesser als der Durchmesser der Aufnahmebohrung (17) aufweist und auf der dem Ausschnitt (19) abgewandten Seite mit einer sehnenartig verlaufenden Abflachung (21) versehen ist, derart, dass der Befestigungsanker (12) in der in Längsrichtung der Aufnahmebohrung (17) verbogenen Stellung in die Aufnahmebohrung (17) passt.

## Claims

1. A sanitary stand fitting for fixing in a receiving hole (17) of a fitting support (16), such as that of a sanitary appliance such as a wash-stand or sink of the like, or other support plate with a fitting body (10) and with a fixing anchor (12) movably supported on the fitting body (10), which anchor, when the fitting body (10) is assembled, can be brought into a position flush with the receiving hole (17) of the fitting support (16), and can be guided through the receiving hole (17) and automatically assumes its locked position after passing through the receiving hole (17), with a flexible spring (11), whereby the fixing anchor (12) is connected with the fitting body (10) by means of the elongated flexible spring (11) having a greater length than the material thickness of the fitting support (16), and whereby the flexible spring (11) after passing of the fixing anchor (12) through the receiving hole (17) serves for an automatically alignment of the fixing anchor (12) on the lower side of the fitting support (16), and with a clamping device, by means of which the fitting body (10) and the fixing anchor (12), in its locked position, are clamped against each other and the clamping device being a threaded rod, **characterised in that** the flexible spring (11) enables any position of the fixing anchor (12) relative to the fitting body (10) and that within the position of the fixing anchor (12) being aligned on the lower side of the fitting support (16) the threaded rod (14) being supported on the fitting body (10) can be passed through a hole (13) formed in the fitting body (10) and can be screwed into a threaded hole formed on the fixing anchor with a thread formed at its end.

2. The stand fitting according to Claim 1, **characterised in that** the spring (11) is designed as a helical spring.

3. The stand fitting according to Claim 1 or 2, **characterised in that** the threaded rod (14) runs in the interior of the spring (1) enclosed by spring coils.

4. The stand fitting according to any one of Claims 1 to 3, **characterised in that** the threaded rod (14) is supported with a shoulder (15) on the fitting body (10).

5. The stand fitting according to Claim 4, **characterised in that** the hole (13) within the fitting body (10) has a recess for receiving the shoulder (15) of the threaded rod (14).

6. The stand fitting according to any one of Claims 1 to 3, **characterised in that** the hole (13) has a female thread and the threaded rod (14) can be screwed into the fitting body (10) with an associated thread.

7. The stand fitting according to any one of Claims 1 to 6, **characterised in that** the fixing anchor (12) consists of a round basic body with a U-shaped section (19), forming two outer side legs (20), for receiving the small water connection pipes to be connected to the stand fitting.

8. The stand fitting according to Claim 7, **characterised in that** the basic body of the fixing anchor (12) has a larger diameter than the diameter of the receiving hole (17), and is provided on the side facing away from the section (19) with a flattened section (21) running in the manner of a chord, so that the fixing anchor (12) fits into the receiving hole (17) in the position bent in the longitudinal direction of the receiving hole (17).

## Revendications

1. Accessoire de robinetterie vertical sanitaire destiné à être fixé dans un perçage de réception (17) d'un support de robinetterie (16) tel qu'un appareil sanitaire comme un lavabo ou un évier ou similaires ou une autre plaque porteuse avec un corps de robinetterie (10) et avec une patte à scellement (12) maintenue de manière mobile sur le corps de robinetterie (10) qui peut être amenée lors du montage du corps de robinetterie (10) dans une position s'alignant sur le perçage de réception (17) du support de robinetterie (16) et peut être guidée par le perçage de réception (17) et occupe après le passage par le perçage de réception (17) automatiquement sa position de blocage, avec un ressort (11) flexible, la patte à scellement (12) étant reliée au corps de robinetterie (10) à l'aide du ressort (11) flexible étiré en longueur et présentant une longueur supérieure à l'épaisseur de matériau du support de robinetterie (16) et le ressort (11) flexible veillant après le passage de la patte à scellement (12) par le perçage de réception (17) à un alignement automatique de la patte à scellement (12) sur le côté inférieur du support de robinetterie (16) et avec un dispositif de serrage, à l'aide duquel le corps de robinetterie (10) et la patte à scellement (12) se trouvant dans sa position de blocage peuvent être tendus l'un contre l'autre et qui est une tige filetée, **caractérisé en ce que** le ressort flexible (11) permet toute position quelconque de la patte à scellement (12) par rapport au corps de robinetterie (10) et **en ce que** la tige filetée (14) s'appuyant sur le corps de robinetterie (10) dans la position alignée sur le dessous du support de robinetterie (16) de la patte à scellement (12) peut être enfichée par un perçage (13) réalisé dans le corps de robinetterie (10) et peut être vissée avec un filetage réalisé sur son extrémité dans un trou fileté réalisé sur la patte à scellement.

2. Accessoire de robinetterie vertical selon la revendication 1, **caractérisé en ce que** le ressort (11) est réalisé comme un ressort cylindrique.

3. Accessoire de robinetterie vertical selon la revendication 1 ou 2, **caractérisé en ce que** la tige filetée (14) s'étend dans l'espace intérieur du ressort (1) entouré par les spires du ressort.

4. Accessoire de robinetterie vertical selon l'une quelconque des revendications 1 à 3, **caractérisé en ce que** la tige filetée (14) s'appuie avec un épaulement (15) sur le corps de robinetterie (10).

5. Accessoire de robinetterie vertical selon la revendication 4, **caractérisé en ce que** le perçage (13) dans le corps de robinetterie (10) présente un affaissement pour le logement de l'épaulement (15) de la tige filetée (14).

6. Accessoire de robinetterie vertical selon l'une quelconque des revendications 1 à 3, **caractérisé en ce que** le perçage (13) présente un filetage intérieur et la tige filetée (14) peut être vissée avec un filetage associé dans le corps de robinetterie (10).

7. Accessoire de robinetterie vertical selon l'une quelconque des revendications 1 à 6, **caractérisé en ce que** la patte à scellement (12) se compose d'un corps de base rond avec une découpe (19) en forme de U, formant deux branches latérales (20) extérieures pour le logement des tuyaux de raccordement d'eau à raccorder à l'accessoire de robinetterie vertical.

8. Accessoire de robinetterie vertical selon la revendication 7, **caractérisé en ce que** le corps de base de la patte à scellement (12) présente un diamètre supérieur au diamètre du perçage de réception (17) et est pourvu sur le côté éloigné de la découpe (19) d'un aplatissement (21) s'étendant comme une corde de telle sorte que la patte à scellement (12) s'adapte dans la position déformée dans le sens longitudinal du perçage de réception (17) dans le perçage de réception (17).
